# EUROPÄISCHE PATENTSCHRIFT

(11) **EP 0 652 048 B1**
(45) Veröffentlichungstag und Bekanntmachung des Hinweises auf die Patenterteilung: **29.12.1997**
(21) Anmeldenummer: 94116375.0
(22) Anmeldetag: 18.10.1994
(51) Int. Cl.: B03B 9/06, B03B 5/48, B03B 5/56, B03B 11/00

(54) **Einrichtung zum Wiederaufbereiten von Restbeton, Sand und dergleichen**
Plant for reclaiming waste concrete, sand and the like
Installation de récupération de résidus de béton, de sable et similaires

(30) Priorität: 23.10.1993 DE 9316231 U; 23.11.1993 DE 9317866 U
(43) Veröffentlichungstag der Anmeldung: 10.05.1995
(73) Patentinhaber: GECO Gesellschaft für Geräte-Konstruktion mbH, D-68775 Ketsch (DE)
(72) Erfinder: Schlusche, Josef, D-68775 Ketsch (DE)
(74) Vertreter: Fischer, Wolf-Dieter, Dipl.-Ing.

(56) Entgegenhaltungen:
- EP-A- 0 311 714
- DE-C- 2 929 857
- DE-U- 9 200 331
- DE-U- 9 316 231
- DE-U- 9 317 866
- GB-A- 252 597
- US-A- 4 127 478

## Beschreibung

Die Erfindung betrifft eine Einrichtung zum Wiederaufbereiten von Restbeton, Sand und ähnlichen Suspensionen mit einer Auswaschvorrichtung, die eine in einem Wassergegenstrom angeordnete Transportspirale aufweist, die auf einem Rotor mit angetriebener waagerechter Welle angeordnet ist, wobei an der einen Seite der Auswaschvorrichtung eine Materialaufgabe und an der anderen Seite eine Nachwaschkammer mit einem oder mehreren Becherrädern sowie einer Austragsvorrichtung vorgesehen ist und sich der Antrieb der Welle auf der Austragsseite befindet, wobei die waagerechte Welle zur Materialaufgabe verlängert ist und eine Materialeintragseinrichtung antreibt, die eine Materialförderung zur Materialaufgabe bewirkt, wobei als Materialeintragseinrichtung ein Schöpfrad vorgesehen ist, das die auszuwaschenden Materialien, wie Kies, Sand und Schmutz- bzw. Waschwasser in die Auswaschmaschine einträgt.

Es ist eine Einrichtung bekannt (DE-U-92 00 331), bei der ein einziger Antrieb für die verschiedenen Aggregate, nämlich den Rotor mit der Transportspirale eine Austragsvorrichtung, ein im Bereich der Austragsvorrichtung angeordnetes Becherrad sowie eine an der Aufgabeseite vorgesehene Fördereinrichtung, die als Förderband oder Becherkratzband ausgebildet ist, vorgesehen ist. Das Kratzband taucht dabei in einen unter dem Bodenniveau angeordneten Behälter ein. Dieses Becherkratzband ist mit Kratzbechern versehen, das sowohl die flüssigen Anteile als auch die Feststoffe, nämlich Sand, Zement und Granulate zu einem Aufgabetisch fördert. Der wesentliche Nachteil dieser bekannten Einrichtung besteht darin, daß für den Antrieb des Kratzbandes ein hoher Kraftaufwand durch Verpressungen oder Schieben der Feststoffe entsteht, was sich ungünstig auf den vorhandenen Hauptantrieb auswirkt. Infolge der auftretenden Kräfte müssen die Bauteile und Lager entsprechend dimensioniert werden, was mit einem erheblichen konstruktiven zusätzlichen Aufwand verbunden ist. Weiterhin ergibt sich bei einer derartigen Materialeintragseinrichtung ein hoher Verschleiß, insbesondere für die Kettenräder und für die Kette. Ebenso ist das Abdichten der unteren Lagerung im abrasiven Medium problematisch.

Bei einer anderen bekannten Vorrichtung (US-A-4127478) zur Verwertung von Restbetonmaterial besteht diese aus einem gestreckten Rahmen mit einem ansteigenden Hauptteil. Das hochgestellte Ende des geneigten Rahmens wird von Stützfüßen getragen. An der Materialaufgabe ist ein Schacht mit einem drehenden Becherwerk vorhanden, in dem mehrere Becher ringförmig angebracht sind. Zur Restbetonaufbereitung ist eine drehende Siebtrommel vorgesehen, die das körnige Material von dem Zement und Wasser trennt. Die Siebanlage läßt das Wasser/Zementgemisch durch die Löcher auslaufen. Hierbei fördert das steigend stehende Siebrohr das Material nach oben und nutzt den Körper als Förderrohr. Die Siebtrommel rotiert und wird komplett angetrieben. Der Austrag erfolgt über die Trommel bzw. eine Förderschnecke. Die Aufnahme von Wasser und Restbeton unter Null ist bei diesem System nicht vorgesehen bzw. es ist ein kostenintensives Absenken der kompletten Anlage erforderlich. Insgesamt ergibt diese Einrichtung einen erheblichen konstruktiven Aufwand für den Antrieb, wobei eine Anpassung an unterschiedliche Feststoff-/Wassergemische nicht möglich ist. Das im Bereich der Materialaufgabe angeordnete Schöpfrad bewirkt keine konstruktive bzw. antriebstechnische Vereinfachung der Einrichtung. Vom System her handelt es sich um eine rotierende Siebanlage, während bei der Erfindung eine Flotationsanlage vorliegt, wo das Material herausgeschöpft wird und das Wasser im Trog verbleibt und über einen Spülvorgang die Feinteile abgeschwemmt werden.

Der Erfindung liegt die Aufgabe zugrunde, eine Einrichtung der eingangs genannten Art so auszubilden, daß der konstruktive Aufwand des Antriebes vereinfacht und eine einfache Anpaßbarkeit an unterschiedliche Feststoff-/Wassergemische möglich ist.

Diese Aufgabe wird nach der Erfindung hauptsächlich dadurch gelöst, daß am Umfang des in eine Vertiefung des Bodens reichenden Schöpfrades Schöpfbecher und Kratzbecher angeordnet sind, die radial zum Schöpfrad verschiebbar und verschwenkbar angebracht sind.

Es ist vorteilhaft, daß das Schöpfrad an einer im Abstand zur waagerechten Welle angeordneten verschiebbaren zusätzlichen Welle gelagert und über eine Übersetzung von der Hauptwelle antreibbar ist.

Weiterhin ist es vorteilhaft, daß in der Vertiefung des Bodens eine Bodenwanne angeordnet ist.

Es wird weiterhin vorgeschlagen, daß das Schöpfrad oberhalb des Bodens in einer geschlossenen Haube umläuft.

Schließlich ist es vorteilhaft, daß am Umfang des Schöpfrades elastisch gefederte Leisten und Kunststoffschaufeln vorgesehen sind.

Eine vorteilhafte Ausführungsform besteht darin, daß am Ende zur Austragung eine Austragseinrichtung mit größerem Becherrad als die Auswaschmaschine und das Becherwerk angebaut ist, welche ermöglicht, die Abwurfstelle zu erhöhen und somit dem ausgewaschenen Material einen größeren Lagerplatz gibt, wobei eine weitere Abgabeerhöhung dadurch erzielt wird, indem eine zusätzliche Welle aufgebaut ist und der Kettenantrieb mit der Hauptwelle verbunden ist und daß auf der anderen Seite auf der Hauptwelle eine Materialeintragseinrichtung aufgebaut ist, welche die Einbringung des auszuwaschenden Materials unter Bodentiefe ermöglicht.

Eine vorteilhafte Ausführungsform sieht vor, daß an der Abwurfstelle eine Schwingförderrinne oder eine steigende Entwässerungsschwingrinne angeordnet sind.

Weiterhin ist es vorteilhaft, daß das äußerste Becherrad mit einem Eigenantrieb versehen ist.

Die Erfindung bringt den wesentlichen Vorteil, daß die Einrichtung an die Zusammensetzung beispielsweise des anfallenden Restbetons und des Reinigungswassers nach Einsatzort unterschiedlich zusammengesetzt, an diese Gegebenheiten angepaßt werden kann. Hierbei lassen sich sämtliche Aggregate der Einrichtung mit dem vorhandenen Hauptantrieb antreiben. Durch diese Einstellmöglichkeit läßt sich auch der Antrieb, die Lager und die anderen tragenden Teile erheblich günstiger auslegen, wobei mit den Schöpfbechern das Wasser und die höherliegenden Feststoffe abgeschöpft werden, während mit den tieferliegenden Schöpfschaufeln die in der Bodenwanne liegenden Feststoffe, z.B. Sand und Kies sowie das restliche Wasser ausgetragen werden. Desweiteren sind verstellbare Kunststoffabstreifschaufeln angebracht, welche den Trog reinigen und die restlichen Feinteile ausräumen. Die variable Zusammensetzung der Becher bestimmt hierbei das Ausschöpfverhältnis.

Die Bodenwanne kann mit Zulaufrohren oder Kanälen von verschiedenen Waschplätzen und Kübeln beschickt werden, wobei hierbei das anfallende Material kontinuierlich zu- und abgefördert wird, was erheblich vorteilhafter ist als die herkömmliche Chargenzubringung. Niedrigbauende Geräte, wie Betonpumpen, Schubkarren und dergleichen werden über bzw. in die Eintragvorrichtung und deren Grube oder Wanne abgereinigt.

Weiterhin ergibt sich der Vorteil, daß mit einfachen Mitteln ein hoher Abwurf im Austragsbereich erreicht wird und hierbei auf zusätzliche Geräte, wie steigende Förderschnecken, Förderbänder od.dgl. verzichtet werden kann.

Die Erfindung wird in der nachfolgenden Beschreibung anhand von in der Zeichnung dargestellten Ausführungsbeispielen näher erläutert.

Es zeigen,
- Fig. 1: eine Ausführungsform einer derartigen Einrichtung im Aufriß,
- Fig. 2: eine Ansicht von vorn mit der Eintragseinrichtung,
- Fig. 3: einen Grundriß von Fig. 1
- Fig. 4: eine Ansicht von vorn gemäß einer weiteren Ausgestaltung der Eintragseinrichtung.
- Fig. 5: eine weitere Ausführungsform einer derartigen Einrichtung im Aufriß,
- Fig. 6: eine Ansicht von vorn mit der Eintragseinrichtung,
- Fig. 7: einen Grundriß von Fig. 5,
- Fig. 8: eine Seitenansicht von Fig. 5 mit Blick auf die Austragseinrichtung und
- Fig. 9: eine entsprechende Ansicht der Einrichtung mit separatem Antrieb.

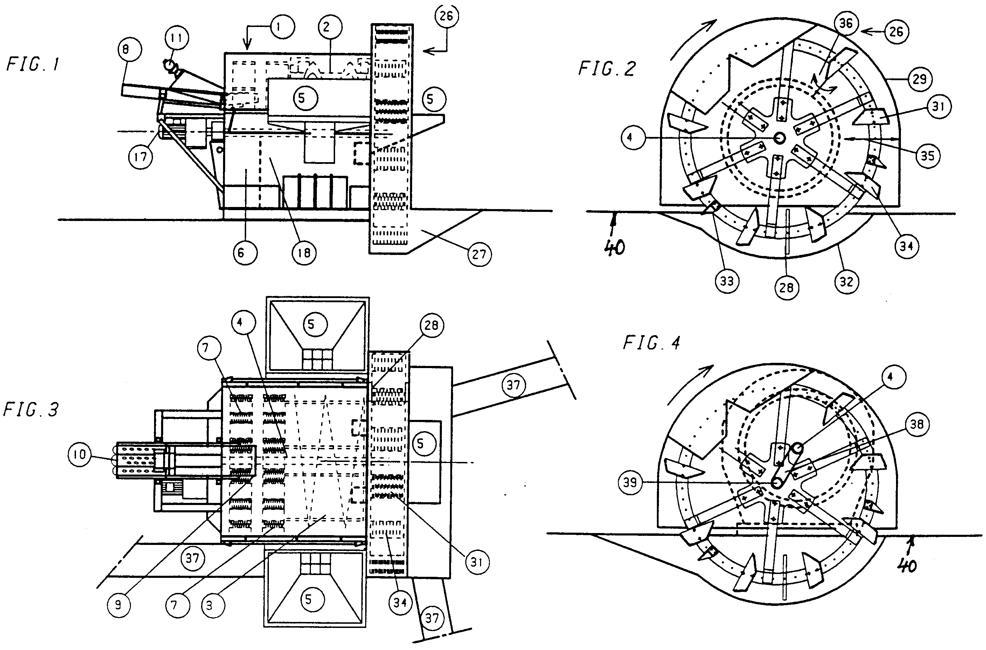

Die in der Zeichnung dargestellte Auswaschvorrichtung 1 besitzt einen im Querschnitt halbkreisförmigen Trog 18, der in seinem linken Endbereich (Figuren 1 und 3) eine Nachwaschkammer 6 aufweist. In dem Trog 18 ist ein Rotor 3 mit einer horizontalen Welle 4 gelagert. Weiterhin ist der Rotor 3 mit einer Transportspirale 2 versehen. An der rechten Stirnseite der Einrichtung sowie zu beiden Seiten der Auswaschvorrichtung 1 befindet sich eine Materialaufgabe 5 in Form eines Aufgabetisches, während an der linken Stirnseite eine Austragsvorrichtung 8 vorgesehen ist. Weiterhin ist im Bereich der Waschkammer auf der Welle 4 ein Becherrad 7 angeordnet. Die Austragsvorrichtung in der Nachwaschkammer besteht aus dem Becherrad 7 und einer ansteigenden Austragsrinne 8, die als Schwingförderrinne mit Entwässerungssieb ausgelegt ist. Die Austragsrinne 8 ist mit einem speziellen Spaltsieb 10 in der gesamten Förderrinne und mit Spaltsieben 9 an den Seitenwänden auf der Aufgabenseite versehen. Weiterhin sind an der Rinne 8 Unwuchtrüttler 11 angebracht. Der Antrieb der Welle 4 erfolgt von der Austragsseite her über ein Antriebsaggregat 17.

Die Welle 4 ist zur Aufgabeseite, d.h. zu dem stirnseitig angeordneten Aufgabetisch 5 hin verlängert und treibt eine Eintragseinrichtung 26 an, die als Becherrad ausgebildet ist. Dieses Becherrad 26 ist so ausgelegt, daß es in eine unter dem Bodenniveau 40 angeordnete Vertiefung 32 eintaucht und daraus fördern kann. Die Fördereinrichtung 26 wird mit einer geschlossenen Haube 29 versehen, wobei in der Vertiefung eine Wanne oder ein Behälter 27 vorgesehen sind.

Das Becherrad 26 ist an seinem Umfang mit Kratzbechern 34 und Schöpfbechern 31 ausgerüstet. Diese besitzen eine radiale Verschiebbarkeit 35 und eine schwenkbare Verstellbarkeit 36, so daß eine Anpassung an unterschiedlich anfallende Wasser- und Feststoffmengen möglich ist. Während die Schöpfbecher 31 durch Höherstellen das Wasser und die Schwebeteile ausschöpfen, tragen die tieferliegenden Kratzbecher den Sand, Feinstoffgemische und Kies sowie das Restwasser aus. Mit variablen Mengen der Becher 31 und 34 kann das zu schöpfende Wasser- und Feststoffverhältnis geregelt werden. Über Zulaufkanäle 37 kann das Waschwasser und die Feststoffe von den Waschplätzen in die Wanne 27 geleitet werden. Weiterhin sind an dem Becherrad 26 Kunststoffschaufeln 33 angeordnet, die den Wannenboden 32 reinigen und die restlichen Feinteile in die Auswaschvorrichtung 1 eintragen. Zur seitlichen Abreinigung für die Eintragseinrichtung 26 dienen verstellbare Gummileisten 28. Die Bodenform 32 der Wanne 27 ermöglicht eine einwandfreie Aufnahme des Wassers und der Feststoffe für die Becher 31 und 34 und ist im wesentlichen der Kreisform des Becherrades 26 angepaßt.

Um die Ausschöpfposition der Eintragseinrichtung 26 außer mittig zu bringen und dadurch den Zulauf in die Wanne 27 günstiger gestalten zu können, besteht die Möglichkeit. die Eintragseinrichtung 26 über eine Übersetzung 38, z.B. einen Kettenradsatz mit Kette und zusätzlicher Welle 39 zu verschieben, wie dies in Figur 4 dargestellt ist. Anstelle einer Übersetzung 38 besteht auch die Möglichkeit die zusätzliche Welle 39 über einen separaten Antrieb anzutreiben.

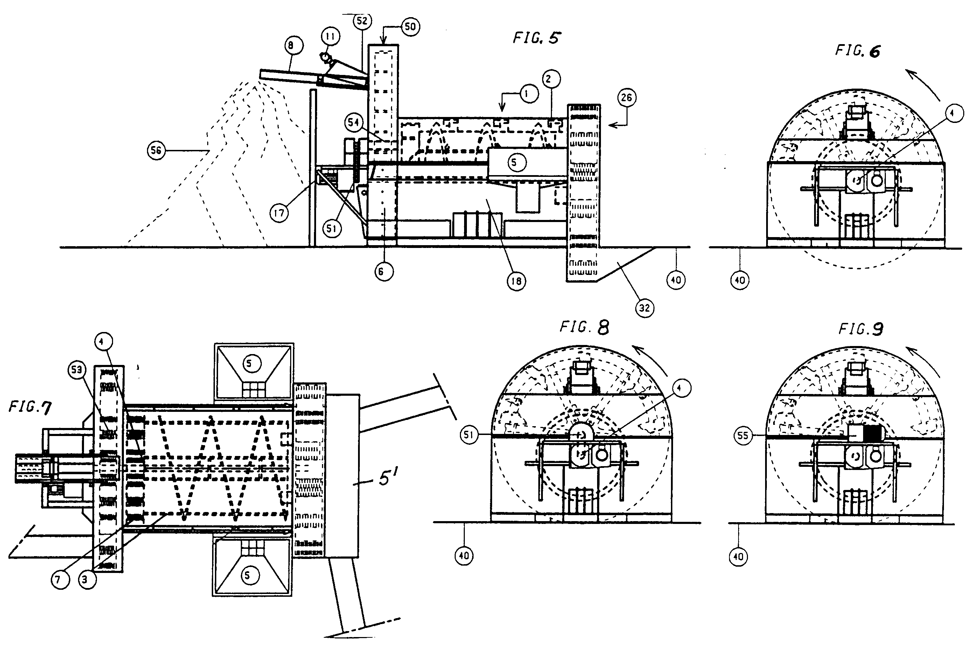

Die in der Zeichnung nach den Figuren 5 bis 8 dargestellte Auswaschvorrichtung 1 besitzt den Trog 18 mit der Nachwaschkammer 6. An der rechten Stirnseite ist für die Eintragseinrichtung eine Übergaberutsche 5' vorgesehen sowie an beiden Seiten der Auswaschvorrichtung 1 befinden sich die Materialaufgaben 5 als Aufgabetische. Im Bereich der Waschkammer ist auf der Welle 4 das Becherrad 7 angeordnet.

Diesem ersten Becherrad 7 folgt eine Austragseinrichtung 50 mit einem weiteren äußeren Becherrad 53, das gegenüber dem innenliegenden Becherrad 7 im Durchmesser vergrößert ist, wobei seine unterste Berührungslinie mit dem Boden 40 auf Nullniveau liegt. Dazu besitzt dieses Becherrad 53 eine eigene nach oben versetzte und getrennt gelagerte Welle 54, die über einen Kettentrieb 51 mit der Hauptwelle 4 verbunden ist. Im Bereich der Abwurfstelle 52 befindet sich als Bestandteil der Austragseinrichtung 8 eine Schwingförderrinne mit dem Unwuchtrüttler 11.

Die Hauptwelle 4 treibt an der Aufgabeseite das Becherrad 26 an.

Gemäß einer weiteren Ausführungsform (Fig. 9) ist für den Antrieb des äußersten Becherrades 50, insbesondere bei größeren Dimensionen, ein gesonderter Antriebsmotor vorgesehen.

## Patentansprüche

1. Einrichtung zum Wiederaufbereiten von Restbeton, Sand und ähnlichen Suspensionen mit einer Auswaschvorrichtung (1), die eine in einem Wassergegenstrom angeordnete Transportspirale (2) aufweist, die auf einem Rotor (3) mit angetriebener waagerechter Welle (4) angeordnet ist, wobei an der einen Seite der Auswaschvorrichtung (1) eine Materialaufgabe (5) und an der anderen Seite eine Nachwaschkammer (6) mit einem oder mehreren Becherrädern (7) sowie einer Austragsvorrichtung (8) vorgesehen ist und sich der Antrieb (17) der Welle (4) auf der Austragsseite befindet, wobei die waagerechte Welle (4) zur Materialaufgabe (5) verlängert ist und eine Materialeintragseinrichtung (26) antreibt, die eine Materialförderung zur Materialaufgabe (5) bewirkt, dadurch gekennzeichnet, daß als Materialeintragseinrichtung (26) ein Schöpfrad (26) vorgesehen ist, das die auszuwaschenden Materialien, wie Kies, Sand und Schmutz- bzw. Waschwasser in die Auswaschmaschine einträgt, daß am Umfang des in eine Vertiefung (32) des Bodens (40) reichenden Schöpfrades (26) Schöpfbecher (31) und Kratzbecher (34 angeordnet sind, die radial zum Schöpfrad (26) verschiebbar (35) und verschwenkbar (36) angebracht sind.

2. Einrichtung nach Anspruch 1, dadurch gekennzeichnet, daß das Schöpfrad (26) an einer im Abstand zur waagerechten Welle (4) die angeordneten verschiebbaren zusätzlichen Welle (39) gelagert und über eine Übersetzung (38) von der Hauptwelle (4) antreibbar ist.

3. Einrichtung nach Anspruch 1 und 2, dadurch gekennzeichnet, daß in der Vertiefung (32) des Bodens (40) eine Bodenwanne (27) angeordnet ist.

4. Einrichtung nach Anspruch 1 bis 3, ,dadurch gekennzeichnet, daß das Schöpfrad (26) oberhalb des Bodens (40) in einer geschlossenen Haube (29) umläuft.

5. Einrichtung nach Anspruch 1 bis 4, dadurch gekennzeichnet, daß am Umfang des Schöpfrades (26) elastisch gefederte Leisten (28) und Kunststoffschaufeln (33) vorgesehen sind.

6. Einrichtung nach einem der Ansprüche 1 bis 5, dadurch gekennzeichnet, daß am Ende zur Austragung eine Austragseinrichtung (50) mit größerem Becherrad (53) als die Auswaschmaschine (1) und das Becherwerk (7) angebaut ist, welche ermöglicht, die Abwurfstelle (52) zu erhöhen und somit dem ausgewaschenen Material einen größeren Lagerplatz (56) gibt, wobei eine weitere Abgabeerhöhung dadurch erzielt wird, indem eine zusätzliche Welle (54) aufgebaut ist und der Kettenantrieb (51) mit der Hauptwelle (4) verbunden ist und daß auf der anderen Seite auf der Hauptwelle (4) eine Materialeintragseinrichtung (26) aufgebaut ist, welche die Einbringung des auszuwaschenden Materials unter Bodentiefe (40) ermöglicht.

7. Einrichtung nach einem der Ansprüche 1 bis 6, dadurch gekennzeichnet, daß an der Abwurfstelle (52) eine Schwingförderrinne (8) oder eine steigende Entwässerungsschwingrinne angeordnet sind.

8. Einrichtung nach einem der Ansprüche 1 bis 7, dadurch gekennzeichnet, daß das äußerste Becherrad (53) mit einem Eigenantrieb (55) versehen werden kann.

## Claims

1. Facility for reprocessing waste concrete, sand and similar suspensions using a washing-out apparatus (1) having a spiral conveyor (2) which is disposed in a water countercurrent and arranged on a rotor (3) with driven horizontal shaft (4), a material feed (5) being provided on one side of the washing-out apparatus (1) and a rewashing chamber (6) with one or more bucket wheels (7) and also a discharging apparatus (8) being provided on the other side of the washing-out apparatus (1), and the drive (17) of the shaft (4) being situated on the discharging side, the horizontal shaft (4) being extended to the material feed (5) and driving a material-charging means (26) which effects material conveyance to the material feed (5), characterised in that as material-charging means (26) there is provided a scoop wheel (26) which charges the materials to be washed out, such as gravel, sand and dirty water or wash water into the washing-out machine, in that scooping buckets (31) and scraping buckets (34) are arranged at the periphery of the scoop wheel (26), which reaches into a depression (32) in the ground (40), the scooping buckets and scraping buckets being fitted to be displaceable (35) radially with respect to the scoop wheel (26) and to be pivotable (36).

2. Facility according to Claim 1, characterised in that the scoop wheel (26) is mounted on a displaceable additional shaft (39) arranged at a distance from the horizontal shaft (4) and can be driven by the main shaft (4) via a transmission (38).

3. Facility according to Claim 1 and 2, characterised in that a ground trough (27) is arranged in the depression (32) in the ground (40).

4. Facility according to Claim 1 to 3, characterised in that the scoop wheel (26) rotates, above the ground (40), in a closed hood (29).

5. Facility according to Claim 1 to 4, characterised in that resiliently sprung strips (28) and plastic shovels (33) are provided at the periphery of the scoop wheel (26).

6. Facility according to one of Claims 1 to 5, characterised in that a discharging means (50) with a larger bucket wheel (53) than the washing-out machine (1) and the bucket elevator (7) is mounted onto the end, for discharging purposes, which discharging means makes it possible to raise the throwing-off point (52) and thus provides a larger storage area (56) for the washed-out material, a further raising of the delivery being achieved by an additional shaft (54) being constructed and the chain drive (51) being connected to the main shaft (4), and in that, on the other side, a material-charging means (26) which makes it possible to introduce the material which is to be washed out and is below ground level (40) is constructed on the main shaft (4).

7. Facility according to one of Claims 1 to 6, characterised in that a vibrating conveyor trough (8) or an ascending vibrating drainage trough are arranged at the throwing-off point (52).

8. Facility according to one of Claims 1 to 7, characterised in that the outermost bucket wheel (53) may be equipped with an independent drive (55).

## Revendications

1. Dispositif pour le retraitement de béton résiduel, sable, et suspensions analogues, avec un dispositif de lavage (1)doté l'une spirale de transport (2) montée dans un contre-courant d'eau et disposée sur un rotor (3) muni d'un arbre horizontal entraîné (4), un alimentateur (5) étant prévu sur l'un des côtés du dispositif de lavage (1), et une chambre de relavage(6), munie d'une ou de plusieurs roues a godets (7), ainsi que d'un dispositif de décharge (8), étant prévue sur l'autre côté, et l'entraînement (17) de l'arbre (4) se situant sur le côté décharge, l'arbre horizontal (4) étant prolongé en direction de l'alimentateur (5) et entraînant un dispositif de chargement (26), qui provoque un transport des matières en direction de l'alimentateur (5), caractérisé en ce qu'une roue à augets (26), qui charge dans la machine de lavage les matières à laver, telles que gravier, sable, eau usée et/ou de lavage, est prévue comme dispositif de chargement (26), et en ce que des godets puiseurs (31) et/ou racleurs (34) sont disposés sur le pourtour de la roue à augets (26), qui pénètre dans une cavité (32) du fond (40), ces godets étant montés avec une possibilité de pivotement (36) et de déplacement (35) dans le sens radial par rapport à la roue à augets (36).

2. Dispositif suivant la revendication 1, caractérisé en ce que la roue à augets (26) est montée sur un arbre supplémentaire mobile (39), disposé à distance de l'arbre horizontal (4), et peut être entraînée par l'arbre principal (4), par l'intermédiaire d'une transmission (38).

3. Dispositif suivant les revendications 1 et 2, caractérisé en ce qu'une cuve (27) est prévue dans la cavité (32) du fond (40).

4. Dispositif suivant les revendications 1 à 3, caractérisé en ce que la roue à augets (26) tourne dans un capot fermé (29), au-dessus du fond (40).

5. Dispositif-suivant les revendications 1 à 4, caractérisé en ce que des barres élastiques (28) et des aubes en matière plastique (33) sont prévues sur le pourtour de la roue à augets (26).

6. Dispositif suivant l'une des revendications 1 à 5, caractérisé en ce qu'un dispositif de décharge (50), muni d'une roue à godets (53) supérieure à celle de la machine de lavage (1) et de l'élévateur à godets (7), est monté en fin de décharge, ce dispositif permettant d'élever le point de rejet (52), donc de conférer un emplacement de stockage (56) supérieur pour les matières lavées, une élévation supplémentaire de la décharge étant obtenue par le montage d'un arbre supplémentaire (54), et par le fait que la commande par chaîne (51) est reliée à l'arbre principal (4), et en ce qu'un dispositif de chargement(26) est monté sur l'autre côté de l'arbre principal (4), ce dispositif permettant de charger les matières à laver au-dessous du niveau du fond (40).

7. Dispositif suivant l'une des revendications 1 à 6, caractérisé en ce qu'une gouttière vibrante (8) ou une gouttière de drainage ascendante sont disposées au point de rejet (52).

8. Dispositif suivant l'une des revendications 1 à 7, caractérisé en ce que la roue à godets extrême (53) peut être munie d'une commande propre (55).
